# EUROPEAN PATENT APPLICATION

(11) **EP 4 635 861 A1**
(43) Date of publication of application: **22.10.2025**
(21) Application number: 23902868.1
(22) Date of filing: 13.12.2023
(51) Int. Cl.: B65B 11/00, B65B 57/20

(54) **METHOD AND DEVICE FOR COUNTING AND CONTROLLING FILM FOR A WRAPPING MACHINE**

(30) Priority: 13.12.2022 ES 202231067; 12.12.2023 ES 202331029
(71) Applicant: Aranguren Comercial del Embalaje, S.L.U., 46113 Massamagrell (Valencia) (ES)
(72) Inventor: BEREBER GOIRICELAYA, Roberto, 46007 Valencia (ES); RUBIO CASALTA, Valentín, 12003 Castellón de la Plana (Castellón) (ES); GARCÍA MARGAIX, Gabriel, 46560 Massalfassar (Valencia) (ES); LÓPEZ CARRILLO, Luis MIguel, 46021 Valencia (ES)
(74) Representative: Soler Lerma, Santiago
(86) International application number: PCT/ES2023/070746
(87) International publication number: WO 2024/126884

(57) **Abstract**

FILM COUNTING AND CONTROL DEVICE FOR WRAPPING MACHINE comprising a communications and management module suitable for communicating with at least one server, a first element identifying the film reels, a second element measuring the amount of film during wrapping cycles and a communications module working in parallel to the wrapping machine to which they are added and the first element working in collaboration with an identification tag placed on the film reels to be dispensed and the second element placed in the film path between the reel and the pallet to be wrapped, wherein the collected data are sent to a server that transforms and cross-references them to obtain valid data for stock management and efficiency in wrapping operations.

## Description

The invention relates to a procedure and a device adaptable to a large majority of wrapping machines (swivel arm, platform, ring or any other), which measures the amount and type of film that is dispensed and the number of wrapped pallets.

The device has means to measure the amount of film consumed as well as to identify the reel, obtaining data on the capacity of the reel and the type of film, being communicated with a server whereto the data is sent. In this way, it is suitable to control in real time the length dispensed in the wrapping processes as well as the type of film used and capacity of the reel, being able to anticipate the needs of reel change and film stock requirements.

The field of action of this invention is that of wrapping machines.

### BACKGROUND TO THE INVENTION

Pallet wrapping machines that carry out wrapping by means of a reel holder carriage are well known, where said reel holders carriages comprise a series of rollers both for supporting the film reel and for orienting and shaping the film before coming into contact with the load to be wrapped.

Patent EP1504995 relates to a wrapping machine which has a pair of arms moving with respect to a frame, wherein the ends of the arms have a film unwinding and folding device.

The applicant's own utility model U201932048 shows an autonomous wrapping machine suitable both for carrying out tasks specific to wrapping and for autonomy of movement and navigation, which has a mobile arm that moves around the load wrapping it.

Patent EP1714876 relates to a wrapping machine comprising a fixed frame and a platform that can rotate on said frame, a shaft that supports a reel of polymeric film which can perform a translational movement around the load to be wrapped.

The applicant's own patent EP 2147864 relates to a fixed machine which has a swivel arm that orbits around the load to wrap, said arm at one of its ends has a reel holder carriage with rollers where at least one of them houses a film reel and the others help to tighten the film before starting the wrapping process.

Patent US2022355962 relates to a system comprising a wrapping machine, a plurality of sensors configured to detect the operation of the machine, and a controller connected to the sensors. The controller is configured to set the desired values of the operating parameters of the machine, during operation of the machine, monitor the actual values of the operating parameters using data from the sensors, and in response to a difference between the desired values and the actual values that are greater than a threshold, issue a command to adjust the operation of the machine so that the difference is less than the threshold.

Patent US 2009293425 relates to a tracking system that monitors the use of film-type stretch film in a wrapping machine which has a proximity sensor to perform said monitoring.

Patent US2010163443 relates to a procedure for packaging products in packaging material arranged on a reel which has a packaging material data memory where the material data is read and processed.

These patents do not show how the process of recognising the correct data memory arranged in the reel is performed.

None of the above inventions contemplates a device independent of the wrapping machine as will be described below where its objective is the control of the stock based on the amount of film consumed and that has elements that can be used to perform said control allowing real-time monitoring of the consumption of film by automating the control of the inventory and being able to automate the times of supply of the stock without the need to request it manually.

### DESCRIPTION OF THE INVENTION

The invention relates to a procedure and a device that allows to know the number of wrapping cycles, the amount of film dispensed, the type of the film and other characteristics of the reel such as, among others, the type or capacity, total and remaining. With the data obtained, through its transformation and combination it is possible to determine the efficiency of wrapping as well as carry out a planning of the stock of reels of each type or foresee the need for changing the reel.

This device is independent of the operation of the machine to which it is added, so it is suitable to be added to wrapping machines. The device collects the information and sends it to a server.

Its operation is parallel to that of the machine to which it is attached, in such a way that there is no interference between the data obtained by the device and those obtained by said machine, avoiding duplications or errors that can distort the final information, which makes it ideal for being a device that can be installed in a pre-existing wrapping machine.

The mention that its operation is *in parallel* to the machine to which it is added must be understood as not sharing resources with it beyond, in any case, the power supply and the support, and it can be added to an already pre-existing machine and the operation of the device is independent of that of the machine, although obviously coordinated.

The control device operates in real time, sending the information obtained to the server.

The procedure, in real time, allows determining both the number of metres of film consumed and the number of wrapped pallets, and therefore the number of metres required for each pallet, allowing to make stock forecasts and the requirements of reel change of each type.

The device comprises:
- A communications and management module suitable for communicating with at least one server.
- A first identification element of the film reels. This first element comprises:
   - Means of identification of the film reel.
   - Means to communicate with other elements, modules or servers.
- A second element that counts film metres during wrapping cycles. This second element comprises:
   - Measurement means of the dispensed film.
   - Means to communicate with other elements, modules or servers.
- A power supply, which is preferably a 220 VAC and 24 VDC input, that powers the device.
- Optionally, means of connection (input/output) of other peripherals.

The first element comprises means for identification of the reel, preferably a peripheral/RFID reader, which detects and reads tags placed on the film reels, preferably on the mandrel. This reader is in constant communication with the communication and management module and this with the server.

The second element, suitable to measure the dispensed film length, comprises measurement procedures such as, amongst others, a tachometer or a sensor. This measuring means can also measure the number of wrapping cycles and thus the number of wrapped pallets.

This second element is preferably placed at any point of the path of the film, from the reel to the pallet, its location being suitable on the last roller of the reel holder carriage wherethrough the already pre-stretched film runs.

In a preferred embodiment, the first and second elements communicate directly with the communication and management module, although in a possible embodiment the first and second elements have means for communicating directly with a server.

The procedure comprises the following phases:
- A first activation phase wherein the device is activated prior to the start of the wrapping process. The installation is carried out in such a way that the device is switched on at the same time as the wrapping machines.
- A second recognition phase, at the start of the wrapping cycle, wherein the first element identifies the film reel placed in the reel holder carriage thanks to the peripheral reader and the identification tag, which in a preferred embodiment will be an RFID reader and an RFID tag. The recognition comprises:
   o A first sub-phase where it seeks to detect the correct card by means of a discrimination of cards that can be recognised by the reader in a certain time range, with the reel tag that is detected the most times in said time range, being the correct tag. Additionally, a filter can be applied to detect tags above a certain threshold of signal strength (db)
   ∘
   ∘ A second sub-phase wherein the peripheral reader detects the identification tag placed on the reel, which contains information on the characteristics of the film reel.
   ∘ A third sub-phase wherein the first element sends the collected information to the server, preferably through the communications and management module.
   ∘ A fourth sub-phase wherein the server relates said information to that stored on that same reel to determine:
      ▪ That the film reel detected is correct.
      ▪ The type of film and reel.
      ▪ The length available, for which it will be determined if it has been used before and in that case how many metres of film remain.
      ▪ The stock of said type of reel to, according to predetermined data, determine if it is necessary to stock up.
      ▪ That the film reel is from an authorised supplier.
- A third calibration phase (to be performed once) of the second element in relation to the point where the reading is performed which must determine the measurement pattern that will serve as a parameter to perform the count of metres of film in the wrapping process.
- A fourth phase of starting the counting of metres of film, wherein once the second element has been calibrated and the film placed, the rollers of the reel holder carriage start the wrapping and the counting of metres in parallel. This metre count starts, preferably, when the film counter detects a signal that the film reel is placed in the reel holder carriage or a signal of the passage of film by the rollers of said carriage is detected.
   Once the film counter detects the start signal, the first element detects the RFID tag and starts the control of the film metre count which is given as valid when at least one of the following events occurs:
      - When at least a predetermined number of metres of film are detected
      - When at least a predetermined number of turns are detected on the pallet.
   Where subsequently a time has passed without receiving film passage signals, it is considered that the wrapping of the pallet has been completed.
- A fifth completion phase wherein wrapping and metre counting is stopped where the collected information is sent to the server, preferably through the communications and management module. In addition, the device has a memory that allows it to store data in the event of loss of communication with the server where once communication is restored, the data is sent to the server.
- A sixth phase of information transformation and data cross-referencing. In this the information is transformed into measurable data and cross-referenced with pre-existing data on the server in order to determine any or some of the following data:
   - Quantity of film in stock of the required type.
   - Film consumption per pallet.
   - Number of pallets for which there is still stock of film.
   - Efficiency of wrapping compared to other previous wrappings.
- A seventh phase of warnings in case parameters outside the parameters predetermined as acceptable are detected, for example, minimum amount of stock or amount of film per pallet.

Before the wrapping machine starts with a wrapping process, the device is put into operation and the first element recognises the reel, and with it both the available length and the type of the film and the reel itself. This is possible because said first element comprises a reader, for example a previously discussed RFID, which is suitable for reading the identification tag (for example RFID) containing the information on the reel.

In a preferred embodiment, in order for the reader to discriminate the tag of the reel from other tags that may be in the environment (on other reels or other objects tagged nearby), a time range is available wherein this reader will read repeated times and can detect and read several nearby tags although, by logic, the tag that is detected the most times in that time range will be considered as the tag that identifies the correct film reel placed on the reel holder carriage.

The tag is supported on the reel itself, for example inside the mandrel, and the reader on the reel holder carriage that supports it or in an external point. The reel mounted on the reel holder carriage is thus identified and characterised by the reader.

To prevent the reel holder shaft from distorting or hindering the reading of the tags, they are preferably arranged at a height higher than the reel holder shaft, in the upper part of the reel since, in general, the reels are higher than the shaft that supports them.

In a preferred embodiment, the tags are arranged in the upper part of the reels, preferably on the inside, on the mandrel, at its highest 130 mm, which, during wrapping operations, are in a higher position.

In a preferred embodiment the information collected by the identification of the RFID label comprises data on whether the reel is new or has already been used before, calculating in that case the amount of film remaining and, in both cases, the type of film. The communication and management module stores the information in its data persistence and sends it to the server which processes it keeping the data updated.

As mentioned, in a preferred embodiment, the tag is placed on the mandrel of the reel, and the reader in the area of influence of the tag, preferably in the real holder carriage, generating a constant reading of the tag which allows keeping the data updated.

In a preferred embodiment, the second element is placed in the film output roller, wherethrough the pre-stretched film runs by the action of a pre-stretch motor, which facilitates the measurement and the relationship between the metres of film dispensed and the requirements for wrapping a pallet.

In a possible embodiment, the second element comprises an inductive sensor placed on the film output roller.

In another possible embodiment, the counting of pallets is carried out by activating the wrapping machine in such a way that each time the machine is switched on it is determined that a pallet has been wrapped generating a progressive count of the number of pallets already wrapped.

The inductive sensor counts metres of film according to the initial calibration discussed above. For this initial calibration, the diameter of the last roller where the film is already stretched must be known. The inductive sensor is placed at a distance such as to allow it to detect said last roller (for example, the detection of the roller is carried out twice each turn), where the data on the diameter of the roller is divided by the number of times the sensor detects the roller for each turn, the resulting data is sent to the server which processes it as a parameter that helps determine the number of film metres consumed per reel and/or per pallet.

In a preferred embodiment, to check the correct operation of the device, its starting and stopping in relation to the last roller of the reel holder carriage detecting possible faults, the power plate of the film pre-stretch motor is connected to the input of the device, said motor having power outputs that send the information to the device about the moment when the pre-stretch motor is started thus enabling the correct activation of the device.

If the pre-stretch motor is started and the device is not activated, the information is sent to the server which recognises this data as a fault, generating an alert in the system about the failure.

In another possible embodiment, the communication between the device and the pre-stretch motor is by wireless technology or other means that allow it.

By means of the readings of the identification tags of the film reels and the data obtained by the sensors for the control of the film length, a relationship is established between the real-time consumption of the film (preferably measured in metres) and the film reels in the current stock which allows establishing the level of consumption of film length in a determined period in order to be able to place orders of film reels in an automated way and in addition, with these data, the cost of each wrapped pallet can be provided.

In a possible embodiment, alerts can be generated (visual, acoustic, or any other type) that indicate, for example, the need to change the reel or that the stock level is below a previously established threshold so that either an automatic order for film reels is generated or it is only by way of communication for the user to place the order.

The device can be installed in any wrapping machine, or in any type of machine that requires these features (labelling machines, scales, etc.) which facilitates its implementation both in new machines and on machines that are already in use, being easy and fast to install.

In a possible embodiment, the power supply of the device is by means of batteries.

### BRIEF DESCRIPTION OF THE FIGURES

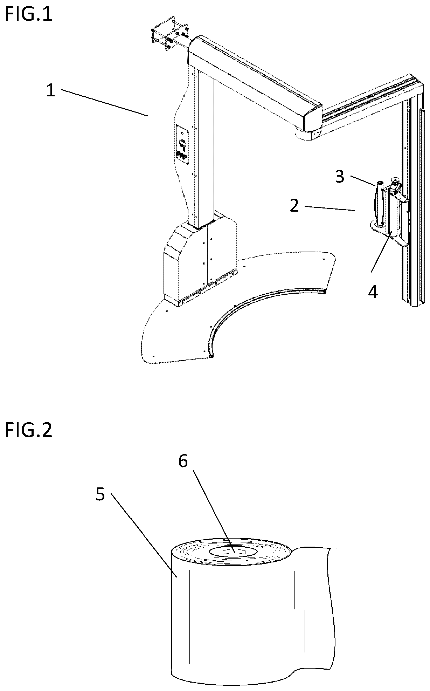

FIGURE 1 shows a wrapping machine (1) of the swivel arm type that mounts a reel holder carriage (2) wherein the reel holder carriage is seen which supports both the reader and the reel (3) and the last output roller (4) where the film measuring element is located, such as a tachometer or a sensor.
FIGURE 2 shows a film reel (5) with the identification tag (6) placed on the inner tube or mandrel.

### DESCRIPTION OF AN EMBODIMENT OF THE INVENTION

A possible embodiment is proposed here that is not limiting but merely an exposition of the invention, a device and a procedure for counting and controlling the film to be dispensed by a wrapping machine.

The device comprises at least the following elements:
A first element comprising an RFID tag reader, that reader being placed in the reel holder carriage in the area of influence of the of the film reel (3) tags. This reader is suitable for reading identification tags (6) placed on the mandrel of the reels (5) and containing identification data of the reel, in particular film length and type.

These identification tags (6) are located inside the mandrel of the film reel in the upper 130 mm, meaning those that during the wrapping operations are in an upper position, closer to the end of the reel holder shaft than to its base. This data is sent to a communications and management module.

A second element is placed in the film path, in particular in the output roller (4) of the reel holder carriage. This element, comprising a tachometer, is suitable for measuring the amount of film dispensed.

The data with the measurement of the dispensed film are sent to the communications and management module.

A communications and management module suitable for receiving data from the first and second elements and sending them to a server where they are transformed and processed using for this purpose also pre-existing data in the server.

The procedure for measuring and controlling the film in a wrapping machine comprises the following phases and sub-phases:
- A first activation phase wherein the device is activated prior to the start of the wrapping process. The installation is carried out in such a way that the device is switched on at the same time as the wrapping machine.
- A second recognition phase wherein the first element identifies the film reel placed on the reel holder carriage thanks to the RFID tag. The recognition comprises:
   o A first sub-phase where it seeks to detect the correct card by means of a discrimination of cards that can be recognised by the reader in a certain time range, with the reel tag that is detected the most times in said time range, being the correct tag. Additionally, a filter may also be applied to detect tags above a given signal strength (db) threshold
   ∘ A second sub-phase wherein the RFID reader detects the RFID tag placed on the reel which contains information on the characteristics of the film reel.
   ∘ A third sub-phase wherein the first element sends the collected information to the server, preferably through the communications and management module.
   ∘ A fourth sub-phase wherein the server relates said information to that stored on that same reel to determine:
      ▪ That the film reel detected is correct.
      ▪ The type of film and reel.
      ▪ The length available, for which it will be determined if it has been used before and in that case how many metres of film remain.
      ▪ The stock of said type of reel to, according to predetermined data, determine if it is necessary to stock up.
      ▪ That the film is from a supplier previously authorised by an anti-fraud system.
- A third calibration phase (to be performed once) of the second element in relation to the point where the reading is performed which must determine the measurement pattern that will serve as a parameter to perform the count of metres of film in the wrapping process.
- A fourth phase of starting the counting of metres of film, wherein once the second element has been calibrated and the film placed, the rollers of the reel holder carriage start the wrapping and the counting of metres in parallel.
   This film metre count refers to
   - That the film counter detects a signal of the passage of film through the rollers of said carriage.
   - Once the film counter detects the start signal, the first element detects the RFID tag and starts the control of the film metre count which is given as valid when at least a predetermined amount of film metres are detected, for example 8 metres, which is a parameter that indicates that at least two complete turns have been given to a European standard pallet.
   - Subsequently, after a period of time without receiving film passage signals, it is considered that the wrapping of the pallet has been completed.
- A fifth completion phase wherein wrapping and counting of metres is stopped where the collected information is sent to the device which sends it to the server for processing.
- A sixth phase of information transformation and data cross-referencing. In this the information is transformed into measurable data and cross-referenced with pre-existing data on the server in order to determine any or some of the following data:
   - Quantity of film in stock of the required type.
   - Film consumption per pallet.
   - Number of pallets for which there is still stock of film.
   - Efficiency of wrapping compared to other previous wrappings.
- A seventh phase of warnings in case parameters outside the predetermined data were detected, for example, minimum quantity of stock or quantity of film per pallet.

## Claims

1. FILM COUNTING AND CONTROL DEVICE FOR WRAPPING MACHINE working in collaboration with a server with which it communicates and whereto it sends data **characterised in that** it comprises;
- A communications and management module suitable for communicating with at least one server.
- A first identification element of the film reels. This first element comprises:
- Means of identification of the film reel.
- Means to communicate with other elements.
- A second element for measuring the quantity of film during wrapping cycles. This second element comprises:
- Measurement means of the dispensed film.
- Means to communicate with other elements.
- A power supply
Wherein the communications module and the first and second elements work in parallel to the wrapping machine whereto they are added and the first element works in collaboration with an identification tag placed inside the mandrel of the film reels (5) that is disposed at a greater height than the reel holder shaft and the second element is placed in the film path between the reel and the pallet to be wrapped.

2. FILM COUNTING AND CONTROL DEVICE FOR WRAPPING MACHINE according to claim 1, **characterised in that** it further comprises connection means (input/output) of other peripherals.

3. FILM COUNTING AND CONTROL DEVICE FOR WRAPPING MACHINE according to claim 1, **characterised in that** the data obtained from the first and second elements are sent in real time to a server.

4. FILM COUNTING AND CONTROL DEVICE FOR WRAPPING MACHINE according to claim 1, **characterised in that** the first element comprises an RFID reader and an RFID identification tag (6), the tag being placed on the reel (5).

5. FILM COUNTING AND CONTROL DEVICE FOR WRAPPING MACHINE according to claim 4, **characterised in that** the RFID reader is placed on the reel holder carriage, in the area of influence of the tag of the film reel (5) that dispenses the film.

6. FILM COUNTING AND CONTROL DEVICE FOR WRAPPING MACHINE according to claim 4, **characterised in that** the RFID tags are placed on the mandrel of the dispensing reel.

7. FILM COUNTING AND CONTROL DEVICE FOR WRAPPING MACHINE according to claim 1, **characterised in that** the measuring element of the second element comprises a tachometer.

8. FILM COUNTING AND CONTROL DEVICE FOR WRAPPING MACHINE according to claim 1, **characterised in that** the measuring element of the second element comprises an inductive sensor for counting film metres and pallets

9. FILM COUNTING AND CONTROL DEVICE FOR WRAPPING MACHINE according to claim 1, **characterised in that** the measuring element of the second element is placed in the film path after pre-stretching.

10. FILM COUNTING AND CONTROL DEVICE FOR WRAPPING MACHINE according to claim 1, **characterised in that** the measuring element of the second element is normally placed in the last roller of the reel holder carriage.

11. PROCEDURE FOR CONTROLLING WRAPPING IN A WRAPPING MACHINE, **characterised in that** it comprises the following phases:
- A first activation phase wherein the device is activated prior to the start of the wrapping process. We install it in such a way that the device turns on at the same time as the wrappers.
- A second recognition phase, at the start of the wrapping cycle, wherein the first element identifies the film reel placed in the reel holder carriage thanks to the identification tag. The recognition comprises:
o A first sub-phase where it seeks to detect the correct card by means of a discrimination of cards that can be recognised by the reader in a certain time range, with the reel tag that is detected the most times in said time range, being the correct tag. Additionally, a filter may also be applied to detect tags above a given signal strength (db) threshold
o A second sub-phase wherein the reader detects the identification tag placed on the reel which contains information on the characteristics of the film reel.
∘ A third sub-phase wherein the first element sends the collected information to the server either directly or through the communications and management module.
o A fourth sub-phase wherein the server relates said information to that stored on that same reel to determine:
▪ That the film reel detected is correct.
▪ The type of film and reel.
▪ The length available, for which it will be determined if it has been used before and **in that** case how many metres of film remain.
▪ The stock of said type of reel to, according to predetermined data, determine if it is necessary to stock up.
▪ That the film is from a previously authorised supplier.
- A third calibration phase (to be performed once) of the second element in relation to the point where the reading is performed which must determine the measurement pattern that will serve as a parameter to perform the count of metres of film in the wrapping process.
- A fourth phase, having already started the wrapping cycle, of measurement of dispensed film.
This film metre count refers to:
o That the film counter detects a signal of the passage of film through the rollers of said carriage.
∘ Once the film counter detects the start signal, the first element detects the label and starts the control of the film metre count which is given as valid when at least a predetermined number of metres of film are detected, being the parameter that indicates that at least a predetermined number of complete turns have been given to a standard pallet.
∘ Subsequently, after a period of time without receiving film passage signals, it is considered that the wrapping of the pallet has been completed.
- A fifth phase, at the end of the wrapping cycle, wherein the information collected during it is sent to the server for processing, either directly or through the communications and management module. In addition, the device has a memory that allows it to store data in the event of loss of communication with the server where once communication is restored, the data is sent to the server.
- A sixth phase of information transformation and data cross-referencing. In this the information is transformed into measurable data and cross-referenced with pre-existing data on the server, including those collected by the first element, in order to determine any or some of the following data:
- Quantity of film in stock of the required type.
- Film consumption per pallet.
- Number of pallets for which there is still stock of film.
- Efficiency of wrapping compared to other previous wrappings.

12. PROCEDURE FOR CONTROLLING WRAPPING IN A WRAPPING MACHINE according to claim 11, **characterised in that** it comprises a seventh phase of warnings in case parameters outside predetermined data are detected.
